Europäisches Patentamt

**European Patent Office** (11) Numéro de publication: **0 237 555**

Office européen des brevets **B1**

(12) **FASCICULE DE BREVET EUROPÉEN**

(19)

(45) Date de publication du fascicule du brevet: (51) Int. Cl.⁴: **G 05 B 19/12**
12.07.89

(21) Numéro de dépôt: **86905837.0**

(22) Date de dépôt: **23.09.86**

(86) Numéro de dépôt international:
**PCT/FR 86/00320**

(87) Numéro de publication internationale:
**WO 87/02151 (09.04.87 Gazette 87/08)**

(54) **PROCEDE ET DISPOSITIF POUR LA DECOUPE DU CONTOUR D'UN OBJET-PLAN.**

(30) Priorité: **27.09.85 FR 8514970**

(43) Date de publication de la demande:
**23.09.87 Bulletin 87/39**

(45) Mention de la délivrance du brevet:
**12.07.89 Bulletin 89/28**

(84) Etats contractants désignés:
**IT**

(56) Documents cité:
**EP-A-0 075 801**

(73) Titulaire: **Etablissement Public dit: CENTRE NATIONAL DE LA RECHERCHE SCIENTIFIQUE (CNRS), 15, Quai Anatole France, F-75007 Paris (FR)**

(72) Inventeur: **KREY, Charlie, 40, avenue des Pyrénées, F-31650 Saint- Orens (FR)**
Inventeur: **AYACHE, Alain, 3, rue de l'Epervier, F-31240 L'Union (FR)**
Inventeur: **BRUEL, André, 29, rue des Cigognes, F-31520 Ramonville Saint- Agne (FR)**

(74) Mandataire: **Barre, Philippe, Cabinet Barre- Gatti- Laforgue 95 rue des Amidonniers, F-31069 Toulouse Cédex (FR)**

LIBER, STOCKHOLM 1989

## Description

L'invention, faite dans le Laboratoire désigné "Langages et Systèmes Informatiques" de l'Institut National Polytechnique de Toulouse, unité associée au C.N.R.S. numéro 347, concerne un procédé de détermination du tracé de la découpe du contour d'un objet-plan en fonction de paramètres concernant l'aspect périphérique dudit objet. Ce procédé vise, de façon automatique, analyser la forme d'un objet découper, déduire de cette analyse les coordonnées du tracé de la découpe et, enfin piloter une machine industrielle réalisant la découpe effective. Cette invention s'étend un dispositif pour la mise en oeuvre dudit procédé.

L'invention peut être en particulier appliquée pour réaliser l'opération dite de "contournage" des peaux dans le domaine de la mégisserie. Cette opération de contournage consiste rendre plus esthétique les peaux qui, après avoir subi les traitements mécaniques et chimiques indispensables, présentent des irrégularités sur leur pourtour effilochures, déchirures, franges... Ces irrégularités sont en effet inexploitables du point de vue industriel, bien que facturées lors de l'achat. A l'heure actuelle, cette tâche est réalisée au moyen d'appareils industriels divers (ciseaux, ciseaux électriques, jet de fluide, laser...) commandés manuellement. La découpe est donc fonction de la technique de l'ouvrier et également de sa fatigue et constitue un travail long et laborieux.

La présente invention se propose de pallier les défauts des systèmes de découpe manuelle existants.

L'objectif essentiel de l'invention est de fournir un système capable d'analyser automatiquement la forme d'un objet-plan et d'en déduire le chemin optimal pour la découpe, en fonction de règles normalisées.

Un autre objectif de l'invention est de fournir un système bénéficiant d'une grande souplesse d'adaptation en vue de pouvoir faire varier les paramètres de la découpe au gré de l'utilisateur (dimensions des irrégularités éliminer, distance la périphérie des trous à contourner, distance entre contour brut et découpe).

Un autre objectif est de fournir un système de structure simple, apte permettre des cadences de traitement élevées.

A cet effet, le procédé visé par l'invention, de détermination du tracé de la découpe du contour d'un objet-plan en·fonction de paramètres concernant l'aspect périphérique dudit objet est du type consistant:

- à générer, au moyen d'une caméra vidéo une image tramée d'une portion du contour de l'objet constituée de points répartis en lignes et en colonnes,
- à saisir en temps réel le signal analogique de cette image, le convertir en une matrice de codes numériques, chacun représentatif du niveau de gris d'un point de l'image et

mémoriser cette matrice en temps réel.

Selon la présente invention, ce procédé consiste:

- à traiter, par le calcul, la matrice de codes numériques en fonction des paramètres de la découpe, de façon à déterminer les points représentatifs du tracé de la découpe,
- à mémoriser des informations représentatives de la position des points représentatifs du tracé de la découpe,
- à effectuer sur lesdites informations une série de tests établis selon des critères programmés en vue de délivrer des informations permettant le pilotage de la caméra pour la visualisation de la portion de contour contiguë,
- et à commander la découpe effective lorsque la totalité du contour est mémorisée.

Le procédé visé par l'invention comporte donc deux étapes successives, bien différenciées. La première étape, destinée réaliser le lissage du contour, consiste réaliser le traitement numérique du signal vidéo représentatif d'une portion du contour de l'objet, de façon déterminer les coordonnées du tracé de la découpe pour chaque image. La deuxième étape réalise la mémorisation des coordonnées du tracé et permet de prendre en charge les problèmes de continuité du tracé et le choix du déplacement de la caméra. Dans ce but, le procédé visé par l'invention permet de compléter le chemin de la découpe correspondant à une image donnée avec une portion de contour de l'image suivante et de déplacer la caméra pour numériser avec une position optimale cette nouvelle image.

Selon une caractéristique de l'invention, la première étape de détermination du tracé de la découpe consiste:

- à numériser la matrice de codes numériques sous forme de codes binaires dont la valeur est fonction de la présence ou de l'absence d'objet en vue d'obtenir des informations représentatives du contour de l'objet,
- à traiter lesdites informations représentatives du contour de l'objet par des méthodes morphologiques telles que érosion, dilatation... en vue de délivrer des informations représentatives de la position des points du tracé de la découpe.

La binarisation de l'image permet l'utilisation de méthodes de calcul s'appliquant à des images binaires. Cette binarisation est effectuée en comparant le niveau de gris de chaque point de l'image avec un seuil dont le niveau de gris est fixé soit expérimentalement, soit lors de l'initialisation du système en prenant l'image d'un objet connu. Cette méthode permet ainsi de séparer les points du fond des points appartenant l'objet, le contour de celui-ci étant alors défini par une transition entre un point appartenant audit objet et un point appartenant au fond.

Le traitement de cette matrice de codes binaires au moyen de méthodes morphologiques permet d'obtenir un lissage du contour de l'objet dont les spécifications fonctions du nombre d'opérations d'érosions ou de dilatations peuvent être modifiées au gré de l'utilisateur.

Cette première étape du traitement de l'image vidéo ayant été réalisée, le procédé consiste alors pour chaque image (n):

- à procéder l'ordonnancement des informations mémorisées, représentatives de la position des points du tracé de la découpe en vue de les restituer dans l'ordre de parcours du contour,
- à extraire desdites informations les informations représentatives de la position du point de début on de la portion de contour, et du point final fn de ladite portion de contour,

les tests effectués sur lesdites informations consistant à comparer la position du point de début on et respectivement du point final Fn de ladite image (n) avec des valeurs de référence mémorisées dont la position est déterminée, en vue de délivrer une information représentative de la position du point final Fn de l'image (n), dans l'image (n+1).

Ainsi les coordonnées du tracé de la découpe d'une image (n) ayant été déterminées, le procédé consiste à ordonner lesdites coordonnées suivant le sens de parcours choisi et à engendrer un déplacement automatique de la caméra qui assure la continuité dans l'analyse du contour de la peau et dans la détermination du chemin de découpe d'une image à la suivante.

Ce déplacement de la caméra aurait pu être systématique en plaçant le point final Fn du contour de l'image (n) au centre de l'image suivante (n+1). Toutefois, ce positionnement qui entraîne une nouvelle analyse de la moitié de l'image précédente ralentirait notablement le processus. Le procédé visé par l'invention se propose donc de trouver un positionnement optimal du point final Fn du contour de l'image (n), dans l'image suivante (n+1), et donc un positionnement optimal de la caméra.

A cet effet, le procédé consiste, selon une autre caractéristique de l'invention, définir un nombre déterminé de points de repère dont la position est prédéterminée et à partitionner chaque image en un nombre de régions déterminées, les tests effectués sur les informations représentatives de la position du point de début on et du point final Fn de la portion de contour d'une image (n) consistant, d'une part, à déterminer le point de repère dont la distance au point de début on est minimale, d'autre part, à déterminer la région de l'image (n) où se trouve positionné le point final Fn, et à en déduire, en fonction de critères programmés, la position dudit point final Fn dans l'image contiguë (n+1).

En outre, le point final Fn de l'image (n) est généralement positionné sur un des points de repère de façon à constituer le point de début (Dn+1) de la portion de contour de l'image (n+1).

Ainsi, les positions respectives du point de début et du point final du tracé de la découpe d'une image (n) ayant été déterminées, le procédé permet de définir la position du point Fn de cette image (n) dans l'image (n+1), de sorte que la portion de contour déjà traitée dans l'image (n) et appartenant aussi à l'image (n+1) soit minimale, et que la portion de contour traitée dans l'image (n+1) soit maximale.

Un choix judicieux du point de repère pour le positionnement dans l'image (n+1) du point final Fn du contour de l'image (n) permet ainsi de diminuer d'environ 30 % le nombre de vues nécessaires à la visualisation de la totalité du contour, par rapport à un procédé consistant à placer systématiquement ce point Fn au centre de l'image suivante.

L'invention s'étend à un dispositif pour la découpe du contour d'un objet-plan en vue de la mise en oeuvre du procédé ci-dessus défini. Ce dispositif est du type comprenant:

- au moins une caméra vidéo agencée pour générer successivement des images vidéo de portions du contour de l'objet,
- une unité de conversion analogique/numérique recevant le signal vidéo de la caméra et adaptée pour assurer la saisie de ce signal et délivrer une matrice de codes numériques fonctions du niveau de luminance du signal vidéo échantillonné,
- un module dit "processeur d'analyse" comprenant:
  . une mémoire de stockage apte à mémoriser chaque matrice de codes numériques et commandée par une unité d'accès direct mémoire apte à gérer le rangement en mémoire de codes numériques,
  . une unité de calcul adaptée pour assurer le traitement des codes numériques contenus dans la mémoire de stockage et associée d'une part à une mémoire programme contenant un programme d'opérations logiques à effectuer, d'autre part, à une mémoire de travail pour le stockage provisoire des résultats,
- un module dit "processeur pilote" agencé pour recevoir les informations issues du processeur d'analyse et comprenant une unité de calcul adaptée pour effectuer des tests sur les informations reçues et associé, d'une part, à une mémoire-programme contenant les tests à effectuer, d'autre part, à une mémoire de travail pour le stockage des informations issues du processeur d'analyse,
- des moyens de transmission aptes à transmettre les informations du processeur d'analyse vers le processeur pilote.

Selon la présente invention, ce dispositif comprend en outre:

- des moyens de déplacement de chaque caméra aptes à engendrer un déplacement plan desdites caméras,
- une interface de communication d'informations, fonctions du résultat des tests, issues du processeur pilote vers les moyens de déplacement de chaque caméra en vue de piloter le déplacement de celles-ci,
- une interface de communication des informations concernant le tracé de la découpe issues du processeur pilote vers des moyens de découpe du contour de l'objet-plan.

Il est à noter que l'utilisation d'un système de vision constitué principalement d'une caméra vidéo, d'une unité de conversion analogique/numérique, d'un processeur d'analyse adapté pour assurer le traitement des codes numériques, et d'un processeur de décision adapté pour assurer le traitement des informations transmises par le processeur d'analyse, est connue en soi. De tels systèmes permettent de générer une image vidéo d'un objet et de traiter par le calcul le signal analogique de cette image en fonction de critères déterminés. Un exemple de réalisation est notamment décrit dans le brevet français n° 2 543 457 qui décrit un système de vision permettant le tri de fruits en fonction de leur aspect externe.

Toutefois, la présente invention se caractérise non simplement par la mise en oeuvre d'un système de vision tel que décrit ci-dessus mais par la combinaison de ce système avec des moyens de déplacement de celui-ci et des moyens de pilotage desdits moyens de déplacement adaptés pour assurer la continuité dans l'analyse du contour d'un objet-plan et dans la détermination du chemin de la découpe, d'une image à la suivante.

D'autres caractéristiques, buts et avantages de l'invention se dégageront de la description qui suit en référence aux dessins annexés, lesquels en présentent un exemple non limitatif sur ces dessins:

- la figure 1 est une vue schématique d'un dispositif de détermination du tracé de la découpe du contour d'un objet-plan, conforme à l'invention,

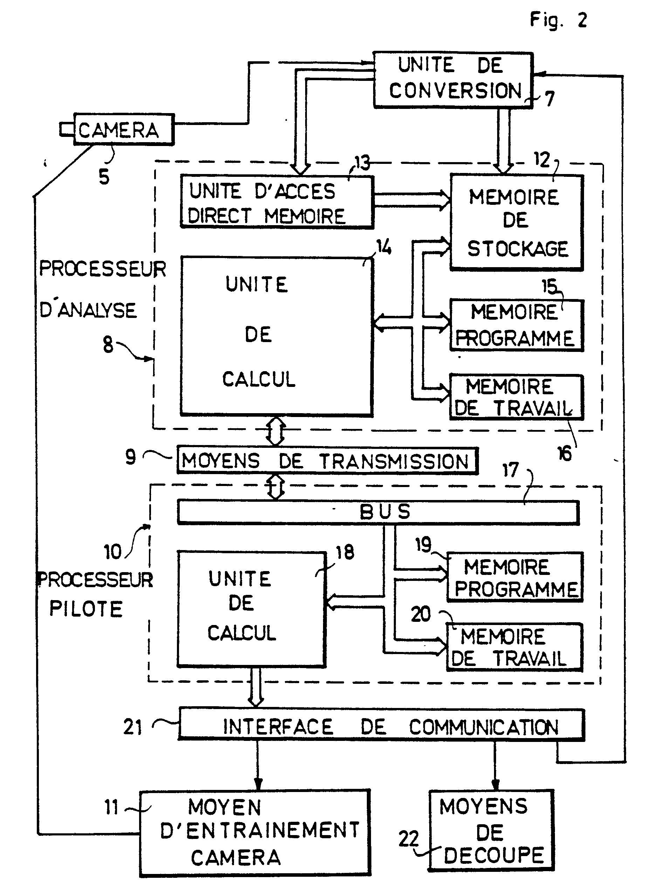

- la figure 2 est une vue synoptique partielle de ce dispositif,
- les figures 3a, 3b, 3c illustrent les différents paramètres de référence utilisés pour piloter le déplacement de la caméra d'une image à la suivante,
- la figure 4 illustre les différentes possibilités de déplacement de la caméra en fonction des paramètres de référence,
- les figures 5a et 5b représentent une peau brute avant traitement et un exemple de découpe obtenue.

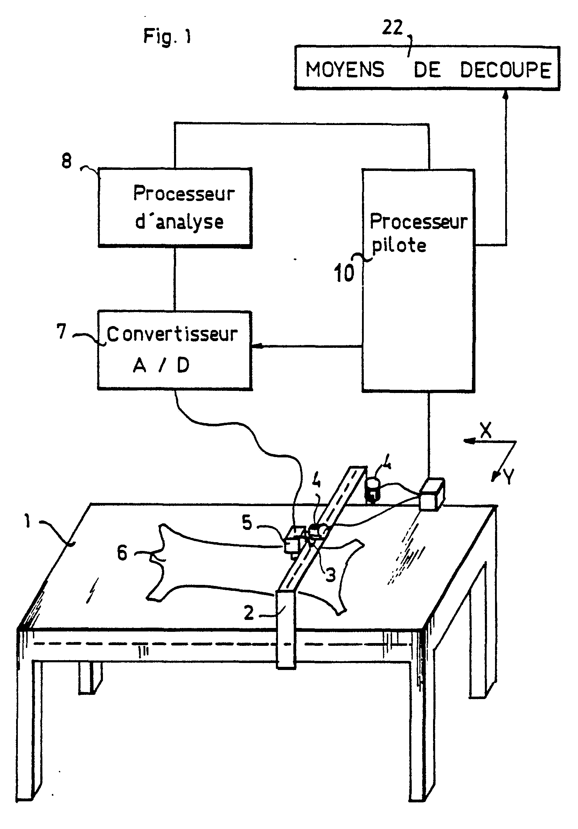

Le dispositif représenté à titre d'exemple à la figure 1 comprend une table 1 à déplacement plan X, Y dotée d'une potence 2 apte à se déplacer longitudinalement par rapport à ladite table. Cette potence 2 est en outre dotée d'un support 3, mobile relativement à celle-ci, selon une direction perpendiculaire à sa direction de déplacement.

Cette table comprend également des moyens d'entraînement constitués de deux moteurs 4 pas à pas adaptés pour entraîner indépendamment l'un de l'autre la potence 2 et respectivement le support 3 le long de directions orthogonales.

Sur le support 3 est agencée une caméra vidéo 5 dont la hauteur au-dessus de la table de déplacement 1 est réglable de façon à pouvoir modifier le champ de vision de cette caméra en fonction du niveau de précision requis. Cette caméra est de préférence du type à transfert de charges "C.C.D", de façon à permettre une saisie en temps réel du contour de l'objet lors d'un déplacement en continu de la caméra.

Cet objet-plan 6 disposé sur la table de déplacement peut être constitué d'une peau dont on désire harmoniser le contour (suppression des effilochures, déchirures, franges) après lui avoir fait subir les traitements mécaniques et chimiques classiques. Cet objet 6 peut également consister en une plaque sur laquelle est représenté un logo ou tout autre motif dont on désire réaliser la découpe.

La caméra vidéo 5 délivre, de façon classique, un signal analogique vidéo, représentatif d'une portion de contour de cet objet 6 à une unité de conversion analogique/numérique 7. Ce signal vidéo est saisi, converti sous forme d'une matrice de codes numériques fonctions du niveau de luminance dudit signal échantillonné, puis traité dans un processeur d'analyse 8 pour délivrer une série d'informations représentatives du tracé de la découpe.

Cette série d'informations représentative du tracé de la découpe issue du processeur d'analyse 8 est délivrée à travers des moyens de transmission 9 vers un processeur pilote 10. Ce processeur 10 est adapté pour mémoriser la position desdits points du tracé et pour effectuer des tests établis selon des critères programmés en vue de délivrer des informations permettant le pilotage de la caméra pour la visualisation de la portion de contour contiguë.

Après réalisation des tests, le processeur pilote 10 délivre les informations de pilotage de la caméra 4 vers les moyens d'entraînement 11 des supports 2 - 3 de cette caméra et délivre également un signal de synchronisation vers le convertisseur 7 autorisant la saisie d'une nouvelle image.

L'unité de conversion analogique/numérique 7 reçoit le signal vidéo issu de la caméra 5 et le signal de synchronisation issu du processeur pilote 10. Cette unité 7 saisit donc le signal vidéo de l'image contiguë à l'image précédemment traitée et affecte aux points de cette image des codes à plusieurs bits représentatifs des niveaux de gris de ces points parmi un nombre de niveaux prédéterminés entre le blanc et le noir, délivrant ainsi une matrice de codes numériques représentative de ladite image.

Cette matrice de codes numériques est délivrée vers le processeur d'analyse 8 comprenant une mémoire de stockage 12 apte à mémoriser ladite matrice de codes numériques sur commande d'une unité d'accès direct mémoire 13, une unité de calcul 14 composée d'un microprocesseur, des mémoires programmes 15 et une mémoire de travail 16 associées au microprocesseur.

Les mémoires programmes 15 contiennent le programme des opérations successives à effectuer par le microprocesseur à partir de la matrice de codes numériques contenue dans la mémoire de stockage 12.

La première opération consiste à comparer le niveau de gris de chaque code numérique avec le niveau de gris d'un seuil déterminé, soit expérimentalement, soit lors de l'initialisation du système en générant l'image d'un objet connu. Cette opération conduit à l'obtention d'une matrice de codes binaires à partir de laquelle il est aisé de déterminer les points de l'image appartenant au fond et les points de l'image appartenant à l'objet.

La deuxième opération consiste à réaliser le lissage du contour de l'objet. Cette opération de lissage consiste à traiter tous les points de l'image par des méthodes morphologiques telles que: érosion et dilatation, permettant d'harmoniser le contour en supprimant les irrégularités de celui-ci.

Il est à noter que ces méthodes d'érosion et de dilatation sont aisément adaptables aux exigences de découpe de chaque utilisateur sans modification de la structure du dispositif. En effet, les caractéristiques du tracé de la découpe dépendent essentiellement du nombre d'érosions et de dilatations auxquelles sont soumis les points appartenant au contour de l'objet.

L'opération suivante consiste à extraire la position des points représentatifs du tracé de la découpe et à procéder à l'ordonnancement desdits points en vue de les restituer dans l'ordre de parcours du contour.

L'extraction des points du contour consiste à déterminer les points dont au moins un point voisin sur la même ligne ou la même colonne appartient au fond. Leur ordonnancement consiste à réaliser le suivi du tracé de la découpe en partant des bords de l'image et à suivre ledit tracé jusqu'à une autre limite de l'image. Cette opération est renouvelée tant qu'il reste des points du tracé non traités, en bordure d'image.

Les contours non repérés représentent des trous situés à l'intérieur de l'objet, à une distance du bord de cette peau suffisamment importante pour que les opérations d'érosion et de dilatation successives ne l'aient pas éliminé.

Il est à noter que le traitement de chaque matrice de codes numériques est réalisé en temps réel pendant le laps de temps séparant la fin de leur mémorisation dans la mémoire de stockage 12 et la saisie d'une nouvelle image dans l'unité de conversion 7. Par exemple, le temps de traitement d'une image réalisant la binarisation, puis trois érosions et dilatations, puis l'extraction de contour et enfin le suivi de ce contour, est de l'ordre de trois secondes.

En outre, les différentes opérations de binarisation, érosion, dilatation, extraction de contours, peuvent être réalisées au moyen de modules câblés, chacun utilisé spécifiquement pour une opération déterminée, qui permettent d'obtenir des temps de calcul encore réduits.

Ces modules câblés sont disposés en série et réalisent le traitement des codes numériques délivrés par l'unité de conversion 7 analogique /numérique, de façon à délivrer au processeur pilote 10 des informations représentatives du tracé de la découpe.

Un dispositif doté de modules câblés ne possède donc pas de processeur d'analyse, et les informations sur le tracé de la découpe sont transmises directement au processeur pilote qui possède dans ce cas une mémoire de stockage apte à mémoriser lesdites informations sur commande d'une unité d'accès direct mémoire.

Les informations représentatives du tracé de la découpe résultant du suivi de contour après traitement de l'image, sont ensuite délivrées vers le processeur pilote 10 dont le rôle est d'assurer la continuité dans la détermination du chemin de découpe, d'une image à l'autre, en complétant le chemin de découpe de l'image (n) avec une portion de contour de l'image (n + 1).

Ce processeur pilote 10 reçoit une série d'informations qui sont distribuées par l'entremise d'un bus de données 17 vers une unité de calcul 18 constituée d'un microprocesseur; celui-ci est associé à une mémoire programme 19 contenant les tests à effectuer et une mémoire de travail 20.

Afin d'assurer la continuité dans la détermination du chemin de découpe, une méthode pourrait consister à positionner le dernier point de l'image (n) au centre de l'image suivante (n + 1). Toutefois cette méthode présente l'inconvénient majeur d'entraîner une deuxième analyse d'une moitié de l'image (n), ce qui ralentit notablement le processus.

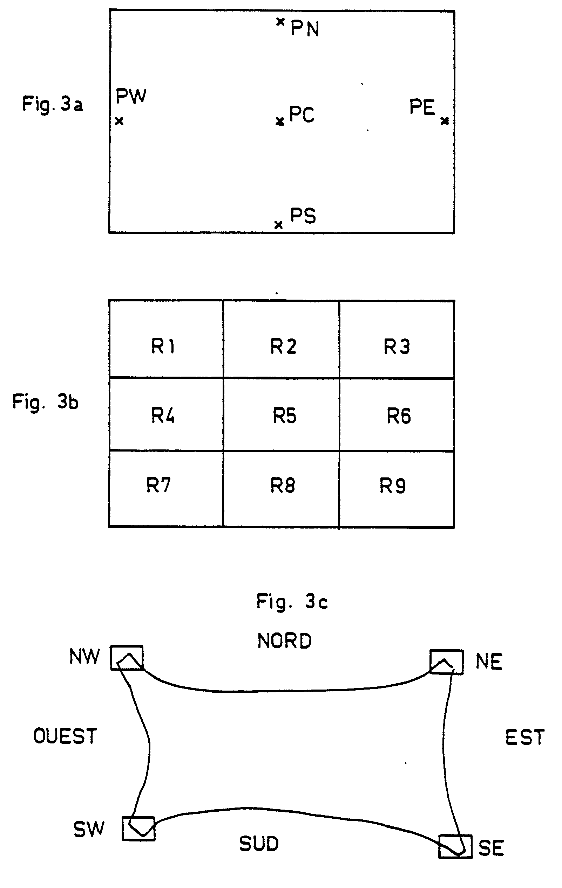

Pour remédier à cet inconvénient, la présente invention se propose de définir cinq points de repère dont la position est déterminée (figure 3a). Quatre de ces cinq points PN, PE, PS et PW sont situés sur la périphérie de l'image, chacun au centre d'un des côtés de ladite image. Le cinquième point PC est positionné au centre de l'image.

Le rôle du processeur pilote 10 consiste à commander un déplacement de la caméra 5 de façon que le point final Fn de l'image (n) vienne se positionner sur l'un des points de repère PN, PE, PS, PW ou PS dans l'image suivante (n + 1), de sorte que la portion de contour déjà traitée dans l'image (n) et appartenant aussi à l'image (n + 1) soit minimale et la portion de contour traitée dans l'image (n + 1) maximale.

Ainsi, excepté pour le traitement de la première image, le point de début D du contour de chaque image se trouve positionné sur un point de repère PN, PE, PS, PW, PC.

En outre, il est à noter que lorsque dans l'image (n + 1) le processeur d'analyse 8 extrait plusieurs contours distincts, le processeur pilote 10 détermine lequel desdits contours se raccorde à l'image (n) en cherchant celui qui possède un point positionné sur ou à proximité du point de repère sur lequel est situé le point final Fn de l'image (n) dans l'image (n + 1).

Chaque image est également partitionnée en neuf régions R1.. .R9 similaires (figure 3b) qui permettent de prendre en compte la position du point final Fn du contour dans l'image (n).

Le pilotage de la caméra en vue de la visualisation d'une image (n + 1) tient donc compte de la position du point initial on et respectivement du point final Fn du chemin de découpe dans l'image (n) et consiste à déterminer, à partir desdites positions et en fonction de critères mémorisés, le point de repère sur lequel sera positionné le point final Fn dans l'image (n + 1).

Cette méthode permet avec des critères de choix judicieusement définis, de diminuer de 30 % environ le nombre d'images nécessaire à la saisie de la totalité du contour d'un objet par rapport à une stratégie plaçant systématiquement le point final Fn au centre de l'image (n + 1).

Toutefois, cette méthode ne prenant en compte que des paramètres relatifs à la portion de peau visualisée, peut conduire à analyser des images, dites "non valides", qui comportent une très faible longueur de contour inférieure à une valeur seuil déterminée. Ceci est le cas notamment lors de l'opération de "contournage" d'une peau lorsque la caméra est positionnée au-dessus d'appendices telles que les pattes de cette peau.

Les critères utilisés ci-dessus peuvent alors conduire à un déplacement de la caméra ne permettant pas de visualiser une portion de contour intéressante. A cet éffet, un deuxième critère est introduit qui tient compte, d'une part, du point de départ de l'analyse de la peau (ou de tout objet-plan de forme définie et présentant des appendices) et, d'autre part, du sens de parcours (trigonométrique ou inverse) (figure 3c).

Le processeur pilote mémorise les coordonnées en X et Y de la caméra 5 sur la table de déplacement 1 et en fonction des coordonnées du point de départ et du sens de parcours, peut ainsi déterminer, lors de la visualisation d'une image "non valide", si cette image correspond ou non à une région particulière de la peau.

Dans l'affirmative, le processeur inhibe les résultats des tests prenant en compte les positions du point de début et du point final du contour de l'image (n) et détermine la position du point final de l'image (n) dans l'image (n + 1) en fonction de la région où est positionnée la caméra.

Il est à noter que lorsque ces critères conduisent eux-mêmes à la visualisation d'une deuxième image "non valide", les résultats des tests sont inhibés et le point final du contour ·de l'image (n) est systématiquement positionné au centre PC de l'image (n + 1). Cette solution est également adoptée lors de la visualisation d'une image non valide en dehors des régions particulières prédéterminées.

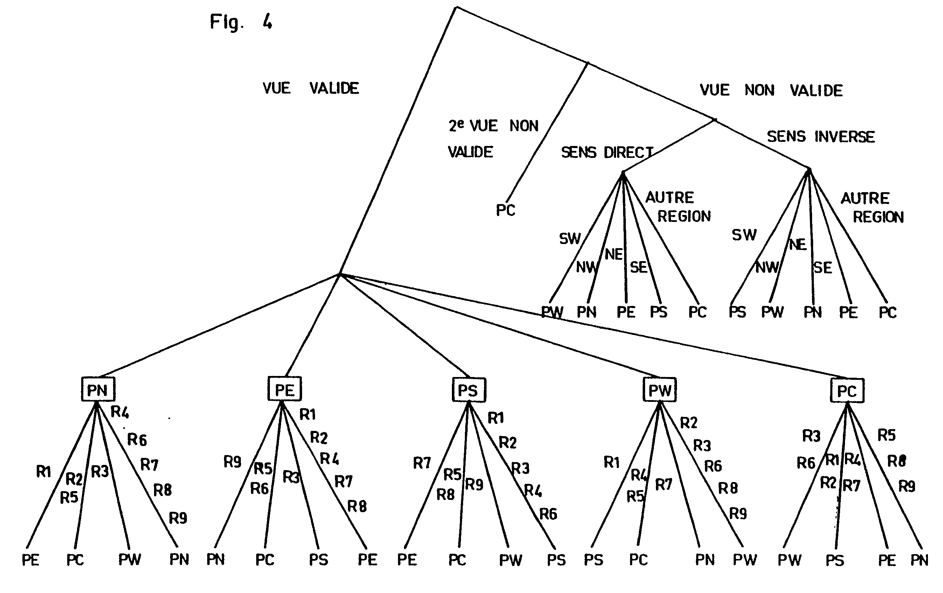

La figure 4 représente à cet effet toutes les combinaisons permettant de déterminer la position du point final Fn de l'image (n), dans l'image (n + 1).

Lorsque la totalité du contour de l'objet est visualisée, les informations mémorisées dans la mémoire de travail 20 du processeur pilote 10 sont délivrées par l'intermédiaire d'interfaces de communication 21 à des moyens de découpe 22 industriels tels que ciseaux électriques, laser, jet de fluide, aptes à réaliser la découpe effective de la peau.

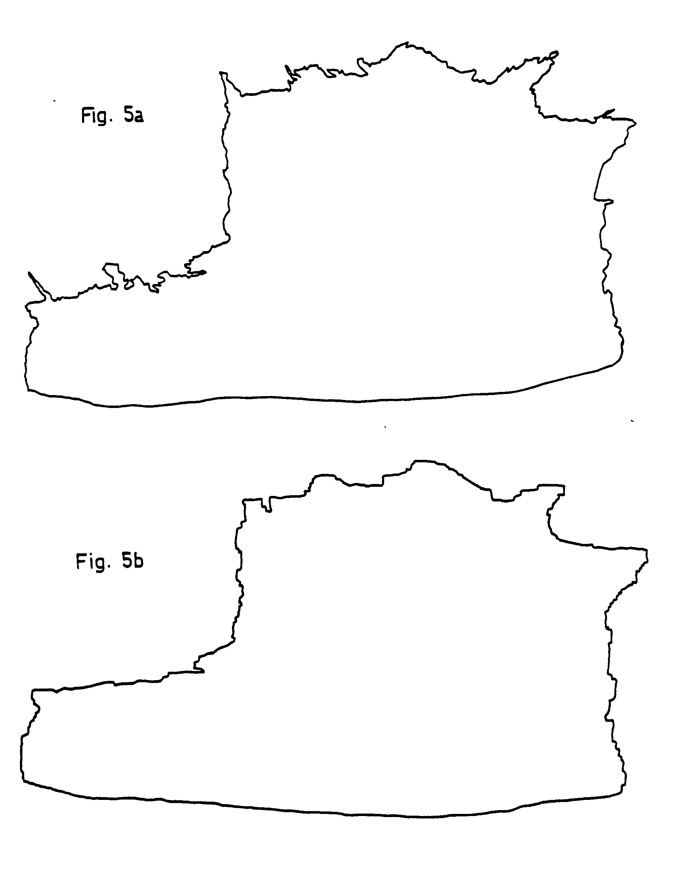

Les figures 5a et 5b représentent une peau avant et après traitement et l'on peut noter que cette peau présente après traitement un contour beaucoup plus régulier.

Un dispositif, tel que décrit ci-dessus, et mettant en oeuvre des modules câblés afin de réaliser les opérations de binarisation, érosion, dilatation, extraction de contours, permet de réaliser la saisie du contour d'une peau de mouton, et à déterminer le chemin optimal de découpe avec une cadence de deux à trois peaux à la minute. Ce rendement peut en outre être amélioré en disposant deux caméras mobiles, chacune analysant une partie de la peau.

## Revendications

1. Procédé de détermination du tracé de la découpe du contour d'un objet-plan en fonction de paramètres concernant l'aspect périphérique dudit' objet, du type consistant:

- à générer, au moyen d'une caméra vidéo (5), une image tramée d'une portion du contour de l'objet (6) constituée de points répartis en lignes et en colonnes,
- à saisir en temps réel le signal analogique de cette image, à le convertir en une matrice de codes numériques, chacun représentatif du niveau de gris d'un point de l'image et à mémoriser cette matrice en temps réel, ledit procédé étant caractérisé en ce qu'il consiste:
- à traiter, par le calcul, la matrice de codes numériques, en fonction des paramètres de la découpe, de façon à déterminer les points représentatifs du tracé de la découpe,
- à mémoriser des informations représentatives de la position des points représentatifs du tracé de la découpe,
- à effectuer sur lesdites informations une série de tests établis selon des critères programmés en vue de délivrer des informations permettant le pilotage de la caméra pour la visualisation de la portion de contour contiguë,
- et à commander la découpe effective lorsque la totalité du contour est mémorisée.

2. Procédé selon la revendication 1, caractérisé en ce qu'il consiste pour chaque image (n) traitée:
- à procéder à l'ordonnancement des informations mémorisées, représentatives de la position des points du tracé de la découpe en vue de les restituer dans l'ordre de parcours du contour,

- à extraire desdites informations les informations représentatives de la position du point de début (Dn) de la portion de contour, et du point final (Fn) de ladite portion de contour,

les tests effectués sur lesdites informations consistant à comparer la position du point de début (Dn) et respectivement du point final (Fn) de ladite image (n), avec des valeurs de référence mémorisées, dont la position est déterminée, en vue de délivrer une information représentative de la position du point final (Fn) de l'image (n), dans l'image (n+1).

3. Procédé selon la revendication 2, caractérisé en ce qu'il consiste, d'une part, à définir un nombre déterminé de points de repère dont la position est prédéterminée et, d'autre part, à partitionner chaque image en un nombre de régions déterminées, les tests effectués sur les informations représentatives de la position du point de début et du point final de la portion de contour d'une image (n) consistant, d'une part, à déterminer le point de repère dont la distance au point de début on est minimale, d'autre part, à déterminer la région de l'image (n) où se trouve positionné le point final (Fn), et à en déduire en fonction de critères programmés la position dudit point final (Fn) dans l'image contiguë (n+1).

4. Procédé selon la revendication 3, caractérisé en ce qu'il consiste à positionner le point final (Fn) de l'image (n) sur un point de repère de façon qu il constitue le point de début de la portion de contour de l'image (n+1).

5. Procédé selon l'une des revendications précédentes, caractérisé en ce que le traitement de la matrice de codes numériques consiste:

- à numériser cette matrice de codes numériques sous forme de codes binaires dont la valeur est fonction de la présence ou de l'absence d'objet en vue d'obtenir des informations représentatives du contour de l'objet,
- à traiter lesdites in formations représentatives du contour de l'objet par des méthodes morphologiques telles que érosion, dilatation... en vue de délivrer des informations représentatives de la position de points du tracé de la découpe.

6. Dispositif de découpe du contour d'un objet-plan en vue de la mise en oeuvre du procédé conforme à l'une des revendications précédentes du type comprenant:

- au moins une caméra vidéo (5) agencée pour générer successivement des images vidéo de portions du contour de l'objet (6),
- une unité de conversion analogique/numérique (7) recevant le signal vidéo de la caméra (5) et adaptée pour assurer la saisie de ce signal et délivrer une matrice de codes numériques fonctions du niveau deluminance du signal vidéo échantillonné,
- un module (8) dit "processeur d'analyse" comprenant:
  . une mémoire de stockage (12) apte à mémoriser chaque matrice de codes numériques et commandée par une unité d'accès direct mémoire (13) apte à gérer le rangement en mémoire de codes numériques,
  . une unité de calcul (14) adaptée pour assurer le traitement des codes numériques contenus dans la mémoire de stockage (12) et associée, d'une part, à une mémoire programme (15) contenant un programme d'opérations logiques à effectuer, d'autre part, à une mémoire de travail (16) pour le stockage provisoire des résultats,

- un module (10) dit "processeur pilote" agencé pour recevoir les informations issues du processeur d'analyse (8) et comprenant une unité de calcul (18) adaptée pour effectuer des tests sur les informations reçues et associé, d'une part, à une mémoire-programme (19) contenant les tests à effectuer, d'autre part, à une mémoire de travail (20) pour le stockage des informations issues du processeur d'analyse,
- des moyens de transmission (9) aptes à transmettre les informations du processeur d'analyse (8) vers le processeur pilote (10),

ledit dispositif étant caractérisé en ce qu'il comprend:

- des moyens de déplacement (1I) de chaque caméra (5) aptes à engendrer un déplacement plan desdites caméras,
- une interface de communication (21) d'informations fonctions du résultat des tests issues du processeur pilote (10) vers les moyens de déplacement (11) de chaque caméra en vue de piloter le déplacement de celles-ci,
- une interface de communication (21) des informations concernant le tracé de la découpe issues du processeur pilote (10) vers des moyens de découpe (22) du contour de l'objet-plan.

7. Dispositif selon la revendication 6, du type comprenant un circuit à transfert de charge "C.C.D" en vue de générer les images vidéo des portions successives de contour.

**Patentansprüche**

1. Verfahren zur Bestimmung des Schneidverlaufs der Kontur eines ebenen Gegenstandes in Abhängigkeit von die periphere Erscheinung des besagten Gegenstandes betreffenden Parametern, der Art die darin besteht,

- daß mittels einer Videokamera (5) ein gerastertes Bild eines Abschnitts der Kontur des Gegenstandes (6) erzeugt wird, das sich aus in Linien und Kolonnen verteilten Punkten zusammensetzt,
- daß das Analogsignal des besagten Bildes in Echtzeit erfaßt, in eine Matrix digitaler Codes, von denen jeder dem Grauheitsgrad eines Bildpunktes entspricht, umgeformt und die besagte Matrix in Echtzeit gespeichert wird, wobei das besagte Verfahren dadurch gekennzeichnet ist, daß es

- in der Bearbeitung durch Berechnung der Matrix digitaler Codes in Abhängigkeit von den Schneidparametern zwecks Bestimmung der für den Schneidverlauf repräsentativen Punkte besteht, sowie
- in der Speicherung von der Lage der für den Schneidverlauf repräsentativen Punkte entsprechenden Informationen,
- in der Unterziehung der besagten Informationen einer Reihe von nach programmierten Kriterien vorgeschriebenen Tests mit dem Ziele, Informationen, die die Führung der Kamera zwecks Veranschaulichung des angrenzenden Konturabschnitts gestatten,
- und in der Steuerung des eigentlichen Schnittes, sobald die gesamte Kontur gespeichert ist.

2. Verfahren nach Anspruch 1, dadurch gekennzeichnet, daß es hinsichtlich jedes verarbeiteten Bildes (n) darin besteht,

- daß zum Ordnen der gespeicherten Informationen, die für die Lage der Punkte des Schneidverlaufs repräsentativ sind, geschritten wird, um sie wieder in die Ordnung des Konturverlaufs zu bringen,
- daß aufgrund der besagten Informationen die für die Lage des Ausgangspunktes (Dn) des Konturabschnitts sowie des Endpunktes (Fn) des besagten Konturabschnitts repräsentativen Informationen gewonnen werden, wobei hinsichtlich der besagten Informationen durchgeführte Tests darin bestehen, daß die Lage des Ausgangspunkts (Dn) bzw. des Edpunkts (Fn) des besagten Bildes (n) mit den gespeicherten Bezugswerten verglichen wird, deren Lage bestimmt ist, um eine für die Lage des Endpunktes (Fn) des Bildes (n) in Bild (n+1)° repräsentative Information zu liefern.

3. Verfahren nach Anspruch 2, dadurch gekennzeichnet, daß es einerseits darin besteht, eine gegebene Anzahl von Bezugspunkten zu definieren, deren Lage vorbestimmt ist, und andererseits jedes Bild in eine gegebene Anzahl von Zonen unterzuteilen, wobei die Tests, denen die für die Ausgangslage und die Endlage des Konturabschnitts eines Bildes (n) repräsentativen Informationen unterzogen werden, einerseits darin bestehen, den Bezugspunkt zu bestimmen, dessen Abstand vom Ausgangspunkt Dn minimal ist, und andererseits darin, die Zone des Bildes (n) zu bestimmen, in der sich der Endpunkt (Fn) befindet, und daraus in Abhängigkeit von programmierten Kriterien die Lage des besagten Endpunktes (Fn) in dem anschließenden Bild (n+1) abzuleiten.

4. Verfahren nach Anspruch 3, dadurch gekennzeichnet, daß es darin besteht, den Endpunkt (Fn) des Bildes (n) auf einem Bezugspunkt zu positionieren, so daß er der Ausgangspunkt des Konturabschnitts des Bildes (n+1) ist.

5. Verfahren nach einem der vorstehenden Ansprüche, dadurch gekennzeichnet, daß die Bearbeitung der Matrix digitaler Codes darin besteht,

- daß diese Matrix digitaler Codes in der Form binärer Codes digitalisiert wird, deren Wert von der Gegenwart oder dem Fehlen des Gegenstandes abhängt, um für die Kontur des Gegenstandes repräsentative Informationen zu erhalten,
- daß die besagten für die Kontur des Gegenstandes repräsentativen Informationen nach morphologischen Methoden wie Erosion, Expansion.., bearbeitet werden, um für die Lage von Punkten des Schneidverlaufs repräsentative Informationen zu liefern.

6. Einrichtung zum Schneiden der Kontur eines ebenen Gegenstandes, um das Verfahren nach einem der vorstehenden Ansprüche durchzuführen, und zwar von der Art umfassend:

- mindestens eine Videokamera (5), die so beschaffen ist, daß sukzessive Videobilder von Abschnitten der Kontur des Gegenstands (6) erzeugt werden,
- eine Einheit zum Analog-/Digitalumformen (7), die das Videosignal von Kamera (5) erhält und so beschaffen ist, daß die Erfassung dieses Signals gewährleistet ist und daß sie eine Matrix digitaler Codes in Abhängigkeit von der Luminanz des die Probe bildenden Videosignals liefert,
- einen als "Analyseprozessor" bezeichneten Modul umfassend:
  . einen Vorratsspeicher (12), der so beschaffen ist, daß er jede Matrix digitaler Codes speichert und durch eine Einheit für Direktzugriffsspeicherung (13) gesteuert wird, die so beschaffen ist, daß sie die Anordnung digitaler Codes im Speicher regelt,
  . eine Recheneinheit (14), die so beschaffen ist, daß sie die Bearbeitung der in dem Vorratsspeicher (12) enthaltenen digitalen Codes gewährleistet und einerseits mit einem Programmspeicher (15), der ein Programm von durchzuführenden Logikoperationen enthält, und andererseits mit einem Arbeitsspeicher (16) für provisorische Speicherung der Ergebnisse verknüpft ist,
- einen als "Führungsprozessor" bezeichneten Modul der so beschaffen ist, daß er die von dem Analyseprozessor (8) abgegebenen Informationen empfängt und eine Recheneinheit (18) umfaßt, die so beschaffen ist, daß sie die empfangenen Informationen Tests unterzieht, und der einerseits mit einem die durchzufürrenden Tests enthaltenden Programmspeicher (19) und andererseits mit einem Arbeitsspeicher (20) zur Speicherung der von dem Analyseprozessor abgegebenen Informationen verknüpft ist,
- Übertragungsmittel (9), die so beschaffen sind, daß sie die von dem Analyseprozessor (8) gelieferten Informationen an den Führungsprozessor übertragen,

wobei die besagte Einrichtung dadurch gekennzeichnet ist, daß sie die folgenden Teile umfaßt:

- Mittel zur Verlagerung (11) jeder Kamera (5), die so beschaffen sind, daß sie ebene Verlagerung der besagten Kameras bewirken,
- eine Schnittstelle für Kommunikation (21) von Informationen in Abhängigkeit von dem Testergebnis, die von dem Führungsprozessor (10) an die Verlagerungsmittel (11) jeder Kamera abgegeben werden, um deren Verlagerung zu steuern,
- eine Schnittstelle für Kommunikation (21) von Informationen hinsichtlich des Schneidverlaufs, ausgegeben von dem Führungsprozessor (10) an Mittel zum Schneiden (22) der Kontur des ebenen Gegenstands.

7. Einrichtung nach Anspruch 6, der Art umfassend eine "C.C.D."-Schaltung für Ladungsübertragung, um die Videobilder sukzessiver Konturabschnitte zu erzeugen.

## Claims

1. Method for determining the trace for cutting the contour of a plane object as a function of parameters relating to the peripheral aspect of said object, of the type consisting:

- in generating, by means of a video camera (5), a screened image of a part of the contour of the object (6) consisting of points distributed in lines and columns,
- in capturing, in real time, the analog signal of said image, in converting it to a matrix of digital codes, each representative of the degree of greyness of a point of the image, and in storing said matrix in real time, said process being characterised in that it consists:
- in processing, by calculation, the matrix of digital codes as a function of the cutting parameters, so as to determine the points representative of the cutting trace,
- in storing the data representative of the position of the points representative of the cutting trace,
- in subjecting said data to a series of tests laid down in accordance with programmed criteria, with a view to supplying data enabling the camera to be guided in order to visualise the adjacent section of the contour,
- and in controlling actual cutting, once the entire contour has been stored.

2. Method according to claim 1, characterised in that, for each image (n) processed, it consists:

- in proceeding to sequence the stored data, representative of the position of the points of the cutting trace, with a view to restring them to the order of the path of the contour,
- in extracting from said data the data representative of the position of the point of origin (Dn) of the contour section, and of the end point (FN) of said contour section,

whereby the tests to which said data are subjected consist in comparing the position of the point of origin (Dn) and of the end point (FN) of said image (n), respectively, with the stored reference values, the position of which is determined, with a view to supplying information representative of the position of the end point (Fn) of image (n), in image (n + 1).

3. Method according to claim 2, characterised in that it consists, on the one hand, in defining a given number of reference points, the position of which is predetermined, and, on the other hand, in dividing each image into a number of specific zones, whereby the tests to which the data representative of the position of the point of origin and of the end point of the contour section of an image (n) are subjected, consist, on the one hand, in determining the reference point, the distance of which from the point of origin Dn is minimal, and, on the other hand, in determining the zone of image (n), in which the end point (Fn) is located, and in deducing therefrom, in accordance with programmed criteria, the position of said end point (Fn) in the adjacent image (n + 1).

4. Method according to claim 3, characterised in that it consists in locating the end point (Fn) of image (n) on a reference point, so that it constitutes the point of origin of the contour section of image (n + 1).

5. Method according to one of the preceding claims, characterised in that processing of the matrix of digital codes consists:

- in digitalising said matrix of digital codes in the form of binary codes, the value of which is a function of the presence or absence of the object, with a view to obtaining data representative of the contour of the object,
- in processing said data representative of the contour of the object by morphological methods such as erosion, expansion... with a view to supplying data representative of the position of points of the cutting trace.

6. Device for cutting the contour of a plane object with a view to implementing the method in accordance with one of the preceding claims, of the type comprising:

- at least one video camera (5) capable of generating successively video images of ccntour sections of the object (6),
- an analog/digital converter (7) receiving the video signal from camera (5) and capable of ensuring capture of said signal and supply of a matrix of digital codes depending on the level of luminance of the sampled video signal,
- a module (8) referred to as the "analysis processor" and comprising:
  . a storage memory (12) capable of storing each matrix of digital codes and controlled by a direct-access memory (13) capable of managing the arrangement of digital codes in the memory,

. a calculating unit (14) capable of ensuring that the digital codes contained in storage memory (12) are processed and linked, on the one hand, with a program memory (is) containing a program of logical operations to be carried out, and, on the other hand, to a working memory (16) for provisional storage of the results,

- a module (10) referred to as the "guide processor" and designed to receive the data emanating from analysis processor (8) and comprising a calculating unit (18) capable of subjecting the data received to tests and linked, on the one hand, to a program memory (19) containing the tests to be carried out, and, on the other hand, to a working memory (20) for storing the data emanating from the analysis processor,

- transmission means (9) capable of transmitting the data from analysis processor (8) to guide processor (10),

said device being characterised in that it comprises:

- means for displacing (11) each camera (5) capable of bringing about level displacement of said cameras,

- a communication interface (21) for data in accordance with the result of tests, emanating from the guide processor (10) towards displacing means (11) of each camera, with a view to guiding the displacement of the latter,

- a communication interface (21) for the data relating to the cutting trace, emanating from guide processor (10) towards the means for cutting (22) of the contour of the plane object.

7. Device according to claim 6, of the type comprising a "C.C.D." charge transfer circuit, with a view to generating video images of successive sections of the contour.

Fig. 1

22

MOYENS DE DECOUPE

8

Processeur
d'analyse

Processeur
pilote

10

7 Convertisseur
A / D

X

Y

1

5

4

4

6

3

2

Fig. 2

Fig. 3a

Fig. 3b

| R1 | R2 | R3 |
|----|----|----|
| R4 | R5 | R6 |
| R7 | R8 | R9 |

Fig. 3c

5

Fig. 4

Fig. 5a

Fig. 5b